Europäisches Patentamt

European Patent Office

Office européen des brevets

(11) Veröffentlichungsnummer : **0 453 446 B1**

(12) **EUROPÄISCHE PATENTSCHRIFT**

(45) Veröffentlichungstag der Patentschrift :
04.08.93 Patentblatt 93/31

(51) Int. Cl.$^5$ : **B09B 3/00**

(21) Anmeldenummer : **90900174.5**

(22) Anmeldetag : **04.01.90**

(86) Internationale Anmeldenummer :
**PCT/EP90/00016**

(87) Internationale Veröffentlichungsnummer :
**WO 90/07992 26.07.90 Gazette 90/17**

(54) **VERFAHREN ZUR MIKROBIOLOGISCHEN BODENDEKONTAMINATION.**

(30) Priorität : **14.01.89 DE 3901050**

(43) Veröffentlichungstag der Anmeldung :
**30.10.91 Patentblatt 91/44**

(45) Bekanntmachung des Hinweises auf die
Patenterteilung :
**04.08.93 Patentblatt 93/31**

(84) Benannte Vertragsstaaten :
**AT BE CH DE DK ES FR GB IT LI NL SE**

(56) Entgegenhaltungen :
**EP-A- 192 285
EP-A- 275 096
DE-A- 3 720 833
FR-A- 2 608 628
Chemie-Ingenieur-Technik, vol. 59, Nr. 6, 1987
Wirtschaftswoche, Nr. 37, 9 September 1988**

(73) Patentinhaber : **BASF Lacke + Farben AG
Glasuritstrasse 1
W-4400 Münster (DE)**

(72) Erfinder : **BACHHAUSEN, Peter
Lerchenhain 73
W-4405 Nottuln (DE)**
Erfinder : **KERSTING, Karl-Heinz
Wilhelm-Spinn-Weg 15
W-4400 Münster (DE)**
Erfinder : **REHM, Hans-Jürgen
Ludwig-Wolker-Strasse 17
W-4400 Münster (DE)**

(74) Vertreter : **Münch, Volker, Dr. et al
c/o BASF Lacke + Farben AG Patentabteilung
Glasuritstrasse 1 Postfach 61 23
W-4400 Münster (DE)**

Jouve, 18, rue Saint-Denis, 75001 PARIS

**Beschreibung**

Gegenstand der vorliegenden Erfindung ist ein Verfahren zur mikrobiologischen Bodendekontamination, bei dem

1) der kontaminierte Boden ausgekoffert und aufbereitet wird,

2) der aufbereitete Boden auf präpariertem Untergrund zu Regenerationsmieten aufgeschichtet wird und

3) die Mieten während des mikrobiologischen Schadstoffabbaus mit Sauerstoff versorgt werden.

Die jahrzehntelange industrielle Nutzung von Geländen führte - bedingt durch z.B. unsachgemäße Ablagerung von Rückständen und Leckagen aus Tank-, Rohrleitungs- und Pumpsystemen - zur Verunreinigung des Bodens. Behandlungsbedürftig sind solche Kontaminationen dann, wenn es zu Beeinträchtigungen des Grundwassers kommt oder wenn verunreinigter Boden im Rahmen von Baumaßnahmen ausgehoben werden muß.

Die zu Bodenkontaminationen führenden Schadstoffe können von sehr unterschiedlicher Art und Herkunft sein. Zu den möglichen Schadstoffen gehören beispielsweise Mineralöle aller Verarbeitungsstufen (Raffineriegrade), wie Rohöle, Dieselöle, Heizöle, Benzine, technische Öle, ferner Chlorkohlenwasserstoffe wie Tri- und Tetrachlorethylen, Trichlorethan und Dichlormethan, organische Lösungsmittel, wie z.B. Phenole, Alkohole, aromatische Kohlenwasserstoffe, Aldehyde, Säuren, Ester, Ketone und Ether, aber auch verschiedene Kunststoffe, verschiedene andere organische und anorganische Stoffe und nicht zu vergessen auch Schädlings- und Unkrautvernichtungsmittel.

Vielfältig sind auch die Möglichkeiten der Sanierung kontaminierter Böden. So gibt es z.B. die sog. "Onsite"-Verfahren, bei denen der kontaminierte Boden zunächst entnommen wird. Die Schadstoffe werden dann an einem anderen Ort mittels verschiedener Behandlungsmethoden wie z.B. thermisch, chemisch, mikrobiologisch oder mittels mechanischer Spülung beseitigt und der gereinigte Boden zur Wiederverfüllung der durch die Bodenentnahme entstandenen Hohlräume verwendet.

Als wirtschaftliche Methode hat sich dabei der mikrobiologische "On-site"-Abbau von organischen Belastungen erwiesen. Die erwünschten Endprodukte des aeroben Abbaus organischer Substanzen sind Kohlendioxid und Wasser. Für die optimale Beseitigung der organischen Schadstoffe ist die Einstellung der sog. Milieubedingungen - wie beispielsweise Sauerstoffgehalt, pH-Wert, Feuchtigkeit und das Vorhandensein ausreichender Mengen an Nährstoffen für die Mikroorganismen - von entscheisdender Bedeutung. Aber auch andere Faktoren, wie z.B. die Wasserlöslichkeit der Schadstoffe, sind sehr wichtig.

Aufgrund dieser Vielzahl von Einflußgrößen sind auch bereits viele verschiedene Verfahren des mikrobiologischen "Onsite"-Abbaus von organischen Schadstoffen beschrieben worden (vgl. z.B. Chem.-Ing.-Tech. 59 (1987), Nr.6, Seite 457-464). So wird beispielsweise bei dem Shell BIOREG-Verfahren (vgl. Chem.-Ing.-Tech. 59 (1987), Nr.6, Seite 461, rechte Spalte) der ausgekofferte kontaminierte Boden auf präpariertem Untergrund mit gemahlener Kiefernborke vermischt und zu Regenerationsmieten (1,2 m Höhe) aufgeschichtet. Zusätzlich ist auch der Einbau von Belüftungsschichten mit Drainagerohren möglich.

Bei einem anderen Verfahren (vgl. Chem.-Ing.-Tech. 59 (1987), Nr.6, Seite 461, rechte Spalte) wird zum Abbau von polycyclischen aromatischen Kohlenwasserstoffen kontaminierter Boden mit organischem Material (z.B. Stroh) durchmischt und dann mit Weißfäulepilzen angeimpft. Die Pilze besitzen ein Enzymsystem zum Abbau von Cellulose, das auch zum Abbau der polycyclischen aromatischen Kohlenwasserstoffe geeignet ist.

Schließlich ist auch ein Versuch der Deurag bekannt (vgl. Wirtschaftswoche Nr.37 vom 09.09.88, Seiten 101 und 102), bei dem die kontaminierte Erde zunächst einfach ausgebreitet und bakterienhaltiges Abwasser aus der eigenen Kläranlage auf die Erde geträufelt wurde. Danach wurde nur noch zweimal im Jahr umgegraben und gewartet (Prinzip des "Land-farming").

Ein entscheidender Nachteil der bekannten biologischen Bodendekontaminationsverfahren ist die beschränkte Anwendbarkeit in bezug auf die Bodenbeschaffenheit. So sind schlüffrig tonige Materialien aufgrund ihrer geringen Luft- und Wasserdurchlässigkeit einer mikrobiologischen Sanierung nicht zugänglich. Weitere schwerwiegende Nachteile der bekannten "On-site"-Verfahren mit mikrobiologischer Reinigung der Böden sind insbesondere der nur sehr langsame Abbau der Schadstoffe - die in der Literatur beschriebenen Behandlungsdauern reichen bis zu 4 Jahre - sowie das Auftreten von Problemen bei Böden mit einer sehr hohen Konzentration der Verunreinigungen (d.h. ca. > 2000 mg/kg) oder bei Böden mit einer sehr inhomogenen Verteilung der einzelnen Verunreinigungen. Außerdem weisen Verfahren, bei denen der kontaminierte Boden zur Sanierung mit Baumrinde oder Häcksel versetzt wird, den Nachteil auf, daß derartiges Erdreich stark an Tragfähigkeit verliert und daher als Baugrund ungeeignet ist.

Der vorliegenden Erfindung lag somit die Aufgabe zugrunde, ein Verfahren zur mikrobiologischen Bodendekontaminierung zur Verfügung zu stellen, bei dem während einer möglichst kurzen Behandlungszeit auch verunreinigte Böden erfolgreich saniert werden können, die mit den herkömmlichen mikrobiologischen Verfahren nur schwer oder gar nicht entsorgt werden können. So sollten mit dem Verfahren insbesondere auch feinkörnige Materialien mit einer nur geringen Luft- und Wasserdurchlässigkeit, z.B. schlüffrig-tonige Materialien, sowie Böden mit einer sehr inhomogenen Verteilung der Verunreinigungen oder mit einer sehr hohen Konzentration der Verunreinigungen dekontaminierbar sein.

Die Aufgabe wird erfindungsgemäß durch ein Verfahren zur mikrobiologischen Bodendekontamination gelöst, bei dem

1) der kontaminierte Boden ausgekoffert und aufbereitet wird,

2) der aufbereitete Boden auf präpariertem Untergrund zu Regenerationsmieten aufgeschichtet wird und

3) die Mieten während des mikrobiologischen Schadstoffabbaus mit Sauerstoff versorgt werden.

Das Verfahren ist dadurch gekennzeichnet, daß der kontaminierte Boden aufbereitet wird, indem er mit Beton und/oder mineralischem Bauschutt, der zuvor auf eine Korngröße < 10 mm, bevorzugt < 6 mm, zerkleinert wurde, vermischt wird.

Es war überraschend und nicht vorhersehbar, daß bei dem erfindungsgemäßen Verfahren die Schadstoffkonzentration kontaminierter Böden bereits nach einer extrem kurzen Behandlungsdauer von i.a. unter 1 Jahr, oft sogar von einem 1/2 Jahr, drastisch reduziert wird, so daß diese Böden z.B. zur Wiederverfüllung der durch die Bodenentnahme entstandenen Hohlräume verwendet werden können. Diese Böden eignen sich außerdem aufgrund ihrer Festigkeit auch als Bauuntergrund. Ein weiterer wichtiger Vorteil des erfindungsgemäßen Verfahrens ist darin zu sehen, daß auch feinkörnige Böden mit nur einer geringen Luft- und Wasserdurchlässigkeit, wie z.B. schlüffig-tonige Materialien, sowie Böden mit einer hohen Konzentration und/oder einer inhomogenen Verteilung der Verunreinigungen mit hervorragenden Ergebnissen dekontaminiert werden.

Das erfindungsgemäße Sanierungsverfahren setzt zunächst die Anlage eines Behandlungsfeldes für die Aufnahme des zu entsorgenden Materials voraus. Gewöhnlich bestehen diese Behandlungsfelder aus einer flach ausgehobenen Grube mit aus dem ausgehobenen Erdreich aufgeschütteten Dämmen an den Seiten. Zur Vermeidung der Kontamination des Untergrundes des Behandlungsfeldes sowie ggf. auch des Grundwassers ist eine Abdichtung des Untergrundes erforderlich. Zur Abdichtung werden im allgemeinen Folien, z.B. aus Kunststoff,mit einer Auflage von etwa 10 cm Sand eingesetz, wobei durch geeignete Maßnahmen die Dichtigkeit einzelner Folienbahnen im Überlappungsbereich sicherzustellen ist. So können beispielsweise im Überlappungsbereich der Kunststoffbahnen Kupferdrähte eingelegt werden und die Dichtigkeit nach dem Verschweißen der einzelnen Bahnen über induktive Messungen überprüft werden. Bevorzugt wird auf den Dichtungsbahnen noch ein Schutzvlies verlegt.

Bei einer bevorzugten Ausführungsform wird das Schutzvlies noch mit einer Kiesschüttung mit eingebauter Drainage und einem Filtervlies zur Abdeckung versehen. Diese Anordnung bietet einerseits den Vorteil, daß anfallendes Wasser wie z.B. Sicker-, Niederschlags- und Behandlungswasser gesammelt und einer Kläranlage zugeführt werden kann, andererseits ist durch den Einbau der Drainage auch eine Kombination der mikrobiologischen Dekontamination mit dem Extraktionsverfahren möglich. Wegen Einzelheiten dieses Verfahrens wird auf die Seiten 9 bis 10 dieser Beschreibung verwiesen.

Ein wichtiger Faktor bei der mikrobiologischen Bodendekontamination ist die Einstellung optimaler Milieubedingungen für die Mikroorganismen, wozu auch die ausreichende Versorgung der Mikroorganismen mit Sauerstoff zählt. Neben der Möglichkeit, chemische Sauerstoff-Spender einzusetzen, kann auch Luftsauerstoff als billigstes und natürliches mikrobielles Oxidationsmittel eingesetzt werden. Um eine ausreichende Sauerstoffversorgung sicherzustellen, wird daher das Behandlungsfeld bevorzugt noch mit einem Belüftungssystem versehen. Dabei ist sowohl eine passive Belüftung mittels Drainagerohren als auch eine aktive Belüftung oder eine Kombination von aktiver und passiver Belüftung möglich. Bei der aktiven Belüftung werden oberhalb des Filtervlieses bzw. Schutzvlieses, falls keine Drainage eingebaut wurde, Filterrohre installiert. Die Durchmesser geeigneter Filterrohre liegen i.a. zwischen 25 und 300 mm. Der Abstand der Rohre untereinander beträgt zwischen 1 und 10 m. Die einzelnen Rohre sind an eine Sammelleitung angeschlossen, an der ein Kompressor installiert ist. Bevorzugt sind in den einzelnen Verbindungsleitungen der Filterrohre noch Absperrschieber installiert, die eine gezielte Belüftung einzelner Mieten gestatten. Die Installation eines derartigen Filterrohrsystems bietet außer der Gewährleistung einer optimalen Belüftung auch den Vorteil, daß dieses Rohrsystem auch zur Bodenluftabsaugung eingesetzt werden kann, indem einfach der Kompressor gegen eine entsprechende Absaugvorrichtung ausgetauscht wird. Insbesondere wenn neben anderen Verunreinigungen auch leicht flüchtige Schadstoffe vorhanden sind, ist eine derartige Kombination von Bodenluftabsaugung und mikrobiologischem Abbau angezeigt.

Bei dem erfindungsgemäßen Verfahren wird wie bei allen sog. On-site-Verfahren zunächst der kontaminierte Boden ausgekoffert und für die Entsorgung aufbereitet. Erfindungsgemäß besteht diese Aufbereitung darin, daß das kontaminierte Erdreich mit Beton und/oder Bauschutt vermischt wird, der bevorzugt ebenfalls kontaminiert ist. Der Beton und/oder Bauschutt wurde vorher auf eine Korngröße $\leqq$ 10 mm, bevorzugt $\leqq$ 6 mm, mit geeigneten Brechanlagen zerkleinert. Das Mischungsverhältnis von Boden zu Beton und/oder Bauschutt liegt i.a. zwischen 1 : 9 Volumenteilen und 9 : 1 Volumenteilen, bevorzugt zwischen 1 : 1 und 3 : 1 Volumen-

EP 0 453 446 B1

teilen, ganz besonders bevorzugt zwischen 1,5 : 1 und 2 : 1 Volumenteilen. Das für die jeweiligen herrschenden Bedingungen optimale Mischungsverhältnis kann leicht anhand einiger weniger Routineversuche vom Durchschnittsfachmann ermittelt werden.

Der Zusatz des Betons und/oder Bauschutts bietet den Mikroorganismen die Möglichkeit zur Adsorption und bewirkt so eine Immobilisierung. Dies wiederum führt zu einer besseren Vermehrung der Mikroorganismen, wodurch höhere Schadstoffbelastungen des Bodens abbaubar sind. Bei der bevorzugten Verwendung von an die Kontamination bereits adaptierten Bakterienspezialkulturen (z.B. durch Verwendung von Mischkulturen aus der werkseigenen Kläranlage) erfolgt durch den Zusatz des Betons und/oder Bauschutts eine Ansiedlung dieser Spezialkulturen, die durch die Adsorption dann für längere Zeit im Boden zur Entsorgung zur Verfügung stehen. Diese Spezialkultur kann sich durch die Immobilisierung gegenüber der normalerweise vorhandenen Bodenmikroflora für längere Zeit durchsetzen. Darüber hinaus hat der Zusatz von ebenfalls kontaminiertem Beton und/oder Bauschutt den Vorteil, daß dieses Material mit entsorgt wird und nicht wie üblicherwiese auf Sonderdeponien abgelagert werden muß. Durch den Zusatz von zerkleinertem Beton und/oder Bauschutt zu sehr feinem Material mit nur einer sehr geringen Luft- und Wasserdurchlässigkeit, wie z.B. schluffrig-tonigem Material, wird die Luft- und Wasserdurchlässigkeit verbessert und die sonst bei derartigen Materialien oft beobachtete Neigung, nach längeren, intensiven Niederschlägen zusammenzubacken, wird drastisch reduziert. Schließlich führt diese Aufbereitung des kontaminierten Materials zu einer Vergleichsmäßigung, d.h. zur Reduzierung von Kontaminationsspitzen, da normalerweise die verschiedenen Schadstoffe unterschiedliche Anreicherungen im Boden und Beton bzw. Bauschutt zeigen.

Dieses so aufbereitete kontaminierte Erdreich wird nun auf dem Behandlungsfeld zu Regenerationsmieten aufgeschichtet. Die Höhe dieser Mieten beträgt im allgemeinen nicht mehr als 2 m.

Die eigentliche Behandlung besteht in der Aktivierung des mikrobiellen Abbaus durch Einstellung geeigneter Milieubedingungen. Dazu gehört die bereits bei der Beschreibung des Behandlungsfeldes auf Seite 6 dieser Beschreibung dargestellte Versorgung der Mikroorganismen mit Sauerstoff, z.B. durch aktive und/oder passive Belüftung. Ferner ist für eine geeignete Feuchteverteilung zu sorgen. Bevorzugt werden daher die Mieten beregnet, wobei die zugeführte Feuchtigkeitsmenge am besten auf die Witterung (z.B. Niederschlagsmenge, Bodenfrost u.dgl.) abgestimmt wird. Gleichzeitig mit der Beregnung wird bevorzugt auch die Zufuhr von Nährstoffen wie Phosphat und Ammonium geregelt. Schließlich wird durch die Beregnung auch Sauerstoff aus der Luft eingetragen. Es besteht aber auch die Möglichkeit, dem Behandlungswasser einen Sauerstoffdonator zuzusetzen.

Die für den mikrobiologischen Abbau der Schadstoffe erforderlichen Mikroorganismen sind oftmals bereits im kontaminierten Boden enthalten, und ein Abbau der Schadstoffe findet nur aufgrund der fehlenden Milieubedingungen nicht statt. Nach Sicherstellung beispielsweise eines ausreichenden Sauerstoffgehalts und einer ausreichenden Feuchtigkeit im Boden dagegen erfolgt ein Abbau der Schadstoffe.

Daneben besteht auch die Möglichkeit, dem Boden speziell gezüchtete Mikroorganismen zuzusetzen. Bevorzugt werden aber Mikroorganismen eingesetzt, die bereits an die Schadstoffe adaptiert sind. Eine sehr vorteilhafte Variante besteht darin, das Behandlungsfeld mit Abwasser aus der werkseigenen Kläranlage zu beregnen. In diesem Fall sind die Mikroorganismen bereits an die Bodenverunreinigungen adaptiert, da die Kontaminanten der Kläranlage ständig als Abwasserinhaltsstoffe zugeführt werden. Gleichzeitig enthalten die Abwässer der Kläranlage noch genügend Wachstumsstoffe wie Stickstoff und Phosphat, so daß keine Anreicherung des Behandlungswassers mit Nährstoffen erforderlich ist.

Typische Bakterien, die bispielsweise zum Abbau von aliphatischen und aromatischen Kohlenwasserstoffen befähigt sind, sind Pseudomonas-Stämme wie z.B. Pseudomones putida, Acinetobacter, grampositive Kokken, grampositive Stäbchen, besonders vom Typ Corynebacterium und Arthrobacter, Hefen wie z.B. Candida-Arten, Pilze wie z.B. Trichoderma resei, Chaetomium, Neurospora, Cladosporium, Botrytis und Penicillium.

Die zur Bodendekontamination erforderliche Behandlungszeit liegt bei dem erfindungsgemäßen Verfahren im allgemeinen bei einem halben Jahr, jedoch ist diese Zeit von vielen äußeren Einflüssen abhängig. Zum einen spielen die Art und Konzentration der Schadstoffe sowie die Art und Zahl der eingesetzten Mikroorganismen eine wichtige Rolle, zum anderen sind aber Parameter wie z.B. die Temperatur von entscheidender Bedeutung. Trotzdem ist aber festzustellen, daß durch das erfindungsgemäße Verfahren die erforderliche Behandlungszeit im Vergleich zu herkömmlichen Verfahren deutlich erniedrigt werden konnte.

Zusätzlich zum beschriebenen mikrobiologischen Schadstoffabau ist es möglich, die Schadstoffe mittels geeigneter Lösemittel unter Ausnutzung der Drainage zu extrahieren. Bei dieser Extraktion werden die Extraktionsmittel versprüht. Durch geeignete Maßnahmen, wie z.B. Abdeckung des Behandlungsfeldes, muß gewährleistet sein, daß keine Belastung der Umgebung durch das Extraktionsmittel stattfindet. Das Extraktions-mittel wird dann mittels der Drainage aufgefangen und aufgearbeitet.

Die Hauptmenge des eingesetzten Extraktionsmittels wird beispielsweise durch Destillation oder Extraktion von den Schadstoffen befreit und kann danach wieder verwendet werden. Die freigesetzte Schadstoffmenge dagegen wird z.B. in einer Verbrennungsanlage o.ä. entsorgt.

Für die Extraktion geeignet sind beispielsweise - je nach zu entfernenden Schadstoffen - flüchtige organische Lösungsmittel, z.B. Alkohole, Wasser und Komplexbildnerlösungen. Diese Kombination von mikrobiologischem Abbau und Extraktionsverfahren wird vor allem dann angewandt, wenn das zu behandelnde Material auch mikrobiell nicht oder nur sehr schwer abbaubare Schadstoffe, z.B. Schwermetalle, enthält.

Eine weitere bevorzugte Ausführungsform des erfindungsgemäßen Verfahrens besteht in der Kombination des beschriebenen mikrobiologischen Abbauverfahrens mit der Bodenluftabsaugung. Eine Möglichkeit zur Durchführung dieses Verfahrens ist bereits auf Seite 6 dieser Beschreibung dargestellt. Angewandt wird diese bevorzugte Ausführungsform vor allem bei kontaminierten Böden, die neben weiteren Schadstoffen auch leicht flüchtige Verunreinigungen enthalten.

Das erfindungsgemäße Verfahren wird nun anhand des nachfolgenden Beispiels näher erläutert.

Ausführungsbeispiel

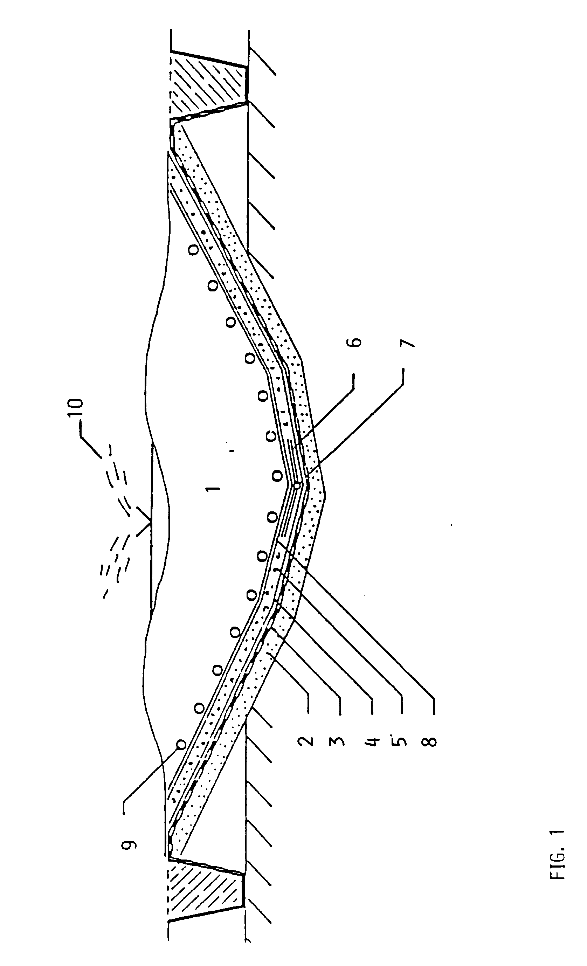

Zunächst erfolgt das Anlegen eines mikrobiologischen Abbaufeldes, das aufgrund der unmittelbaren Nachbarschaft von Trinkwasserschutzzonen vollständig gegenüber dem Untergrund abgedichtet wird (vgl. Fig. 1).

Zur Aufnahme des zu behandelnden Erdreichs (1) wird zunächst eine flache Mulde ausgehoben und der Aushub seitlich als Damm aufgesetzt. Nachdem die Mulde mit einer 10 cm dicken verdichteten Sandschicht (2) versehen worden ist, wird eine Polyethylendichtbahn (3) (Schlegelplatte) eingebracht, die seitlich verankert wird. Nun wird ein Schutzvlies (4) verlegt und mit einer Kiesschüttung (5) (Körnung 8-32 mm) zur Aufnahme der Drainagerohre versehen. Die Drainage (6) mündet in einen Sammelschacht, in dem das anfallende Sicker-, Niederschlags- und Behandlungswasser aufgefangen und zur Kläranlage abgeleitet werden kann (7).

Anschließend erhält die Kiesschicht ein Filtervlies (8) als Abdeckung. Oberhalb des Filtervlieses wird eine aktive Belüftungsanlage, bestehend aus etwa 30 cm über dem Filtervlies angeordneten geschlitzten Filterrohren ($\varnothing$ 100 mm), installiert. Der Abstand der Rohre untereinander beträgt 2 m. Die Filterrohre werden über Schläuche und Absperrschieber an eine Sammelleitung angeschlossen. Durch die Schieber besteht die Möglichkeit, die Mieten einzeln zu belüften. Für die Belüftung wird noch ein Kompressor mit Druckminderstation installiert. Zur passiven Belüftung bzw. Entlüftung der Mieten werden zwischen den Filterrohren noch Drainagerohre (9) ($\varnothing$ 150 mm) angeordnet. Außerdem werden entsprechende Vorrichtungen (10) zur Beregnung des Behandlungsfeldes mit geklärtem Abwasser installiert. Der Aufbau des Abbaufeldes ist in Figur 1 schematisch dargestellt. Im folgenden wird nun die mikrobiologische Reinigung von kontaminiertem Boden unter einem alten Fabrikgebäude, das neu errichtet werden soll, beschrieben.

Der unter dem Gebäude befindliche kontaminierte Boden besteht aus schlüffrig-tonigem Material mit vereinzelten Sandlinsen. Ab ca. 1,5 bis 2 m unter Grund ist der Boden feinschluffrig, trocken und sehr fest. Ein derartiger Boden zeichnet sich durch eine geringe Luft- und Wasserdurchlässigkeit aus. Der kontaminierte Boden wird ausgekoffert und in wasserdichten Containern zwischengelagert.

Die ebenfalls kontaminierte Kellersohle und die kontaminierten Fundamente des alten Gebäudes werden gleichfalls ausgehoben und über eine Brechanlage auf Sandkorngröße ($\leqq$6 mm) zerkleinert.

Der Bodenaushub zeigt eine sehr inhomogene Verteilung der einzelnen Verunreinigungen. Analysen ergaben folgende maximalen Belastungen in mg pro kg Boden:

| | |
|---|---|
| Benzol | 66,0 |
| Toluol | 740,0 |
| Ethylbenzol | 104,9 |
| Xylole | 2030,4 |
| Cumol | 24,2 |
| Mesitylen | 49,8 |
| tert. Butylbenzol | 141,1 |
| Terpentinöl ⎫ Kohlenwasserstoffe | |
| Phthalsäureester ⎬ inkl. polarer | 10200,0 |
| Fettsäureester ⎭ Verbindungen | |

Die Durchschnittsbelastung beträgt 7 mg/kg Benzol, 171 mg/kg Aromaten und 432 mg/kg Kohlenwasserstoffe. Weitere Verbindungen wurden nicht gefunden.

Benzol war dabei teilweise bis zum Kreidemergel - ca 3,5 m unter Grund - vorgedrungen, während die Kontamination alkylierter Aromaten obeflächennäher lag. Die Belastung mit Phthalsäure- und Fettsäureestern war im wesentlichen auf die Kellersohle und den Bereich unter Betonfugen und -rissen beschränkt. Wie bei den alkylierten Aromten war auch bei Terpentinöl eine oberflächennahe Belastung beobachtbar.

Mikrobiologische Untersuchungen des Bodenaushubs ergaben, daß eine Mikroflora und -fauna vorhanden war. Neben Pseudomonaden wurden vor allem Pilze, wie z.B. Trichoderma resei, Chaetomium, Neurospora, Cladosporium, Botrytis sowie auch Penicillium gefunden. Die Speziesanzahl lag bei $10^4$ bis $9 \times 10^4$ Mikroorganismen/g Bodenaushub.

Der zerkleinerte Bauschutt wird in einem Mischer mit dem kontaminierten Boden im Verhältnis 1:1 gemischt. Das Mischgut (insgesamt ca. 4000 t) wird in Mieten bis 2 m Höhe in das Abbaufeld eingebracht.

Die Belüftung der Mieten erfolgt mittels der Drainagerohre (passive Belüftung) sowie über die Belüftungsanlage (aktive Belüftung) mittels eines Kompressors. Zusätzlich werden die Mieten mit Wasser aus der werkseigenen Kläranlage berieselt. Diese Beregnung erfolgt witterungsabhängig (Berücksichtigung der Niederschlagsmenge, Gefahr/Auftreten von Bodenfrost). Insgesamt werden während der 6monatigen Behandlungsdauer von Oktober bis März ca. 140 m$^3$ Behandlungswasser aufgebracht.

Um mit dem Behandlungswasser keine - lediglich durch Schlammadsorption - eliminierten organischen Abwasserinhaltsstoffe und keine Schwermetalle in den zu behandelnden Boden einzubringen, wurde mit dem Ablauf hinter dem Nachklärbecken behandelt. Eine mikrobiologische Analyse des eingesetzten Klärwassers ergab folgende Mikroorganismen-Arten: Pseudomonaden, im wesentlichen Pseudomones putida, Acinetobacter, grampositive Kokken, grampositive Stäbchen, besonders Corynebacterium und Arthrobacter sowie Hefen - Candida-Arten -. Die Speziesanzahl lag bei $2,2 \times 10^5$ Mikroorganismen/g. Gleichzeitig werden durch das Klärwasser Stickstoff und Phosphat als Wachstumsfaktoren nachgeliefert.

Die Verwendung von Klärwasser aus der werkseigenen Kläranlage bietet den Vorteil, daß dem Boden bereits auf die Verunreinigungen des Bodens adaptierte Mikroorganismen zugeführt werden, da die Kontaminanten als Abwasserinhaltsstoffe der Kläranlage zugeführt werden.

Mikrobiologische Untersuchungen der Mieten ergaben im wesentlichen identische Mikroorganismenarten wie im Auslauf der Kläranlage. An den Oberflächen der Mieten fanden sich Mikroorganismuszahlen von $1,2 \times 10^5$ bis $1,8 \times 10^7$ pro g Boden, an der Basis der Mieten befanden sich $2 \times 10^5$ bis zumeist $2 \times 10^6$ Mikroorganismen/g Boden.

Somit ist festzustellen, daß durch die Maßnahmen ganz erhebliche Vermehrungen der Mikroorganismen eingetreten sind, die zwischen 2 und 3 Zehnerpotenzen liegen.

Nach einer 5monatigen Behandlungszeit (Oktober bis März) sind die Verunreinigungen bereits drastisch reduziert. Chemische Analysen ergeben die in Tabellen 1 und 2 aufgeführten Belastungen. Zum Vergleich wurde noch ein zweites, analog dem gerade beschriebenen Feld I aufgebautes Behandlungsfeld II angelegt. Im Unterschied zu dem gerade beschriebenen Feld I wurde dieses Feld II nur intensiv belüftet, aber nicht beregnet. Nach einer Behandlungsdauer von 5 Monaten (Herbst/Winter) wurden ebenfalls die Schadstoffkonzentrationen untersucht. Die Ergebnisse sind gleichfalls in Tabellen 1 und 2 dargestellt.

Der Vergleich der Abbauraten des Feldes mit Berieselung mit denen des Feldes ohne Berieselung zeigt den wichtigen Einfluß des zugeführten Klärwassers.

Tabelle 1: Maximaler Schadstoffgehalt in mg/kg Bodenaushub

| | vor der Be-handlung | 4-5 Monate Feld I mit Berieselung | 4-5 Monate Feld II ohne Berieselung |
|---|---|---|---|
| Benzol | 66,0 | 0,02 | 0,14 |
| Toluol | 740,0 | 0,12 | 1,50 |
| Ethylbenzol | 104,9 | 0,05 | 0,19 |
| Xylole | 2030,4 | 0,48 | 3,60 |
| Cumol | 24,2 | 0,01 | 0,05 |
| Mesitylen | 49,8 | 0,61 | 1,78 |
| tert.-Butyl-benzol | 141,1 | 0,05 | 0,25 |
| Terpentin-)<br> öl )<br>Phthalsäu-)a)<br> reester )<br>Fettsäure-)<br> ester ) | 10200,0 | 600,0 | |

a) Zusammengefaßt als Kohlenwasserstoffe
   inkl. polarer Verbindungen

Tabelle 2: Durchschnittlicher Schadstoffgehalt
           im mg/kg Bodenaushub

| | vor der Be-handlung | 4 - 5 Monate Feld I mit Berieselung | 4 - 5 Monate Feld II ohne Berieselung |
|---|---|---|---|
| Benzol | 7 | 0,02 | 0,14 |
| Aromaten | 171 | 1,06 | 7,51 |
| Kohlenwasser-stoffe inkl. polarer Ver-bindungen | 432 | 92,0 | n. b. |

n.b. nicht bestimmt

Die beobachtete Eliminierungsreihenfolge

7

tert.Butylbenzol > Toluol > Xylole > Cumol ≧ Ethylbenzol >> Mesitylen

deckt sich weitgehend mit den Literaturdaten zum biologischen Abbau der aromatischen Kohlenwasserstoffe . Dabei muß allerdings berücksichtigt werden, daß bei der Behandlung mit geklärtem Abwasser eine Mischflora und -fauna zugeführt wurde und daher Abweichungen von Literaturdaten, die auf Arbeiten mit Reinkulturen beruhen, möglich sind.

Diese gefundene Reihenfolge zeigt, daß der biologische Abbau und nicht physikalische Effekte, wie Abdampfen und/oder Elution durch Niederschlags- und Beregnungswasser, der dominierende Faktor bei dem Schadstoffabbau ist. Eine Dominanz der physikalischen Effekte wäre bei folgender Reihenfolge zu vermuten:

Benzol > Toluol > Ethylbenzol > Cumol Xylole > tert.Butylbenzol > Mesitylen

## Patentansprüche

1. Verfahren zur mikrobiologischen Bodendekontamination, bei dem
   1) der kontaminierte Boden ausgekoffert und aufbereitet wird,
   2) der aufbereitete Boden auf präpariertem Untergrund zu Regenerationsmieten aufgeschichtet wird und
   3) die Mieten während des mikrobiologischen Schadstoffabbaus mit Sauerstoff versorgt werden,
   dadurch gekennzeichnet, daß der kontamiminierte Boden aufbereitet wird, indem er mit Beton und/oder mineralischem Bauschutt, der zuvor auf eine Korngröße ≦ 10 mm, bevorzugt ≦ 6 mm, zerkleinert wurde, vermischt wird.

2. Verfahren nach Anspruch 1, dadurch gekennzeichnet, daß der Beton und/oder Bauschutt ebenfalls kontaminiert ist.

3. Verfahren nach Anspruch 1 oder 2, dadurch gekennzeichnet, daß das Mischungsverhältnis Boden:Beton und/oder Bauschutt zwischen 1 : 9 und 9 : 1 Volumenteilen, bevorzugt zwischen 1 : 1 und 3 : 1 Volumenteilen, liegt.

4. Verfahren nach einem der Ansprüche 1 bis 3, dadurch gekennzeichnet, daß die Mieten während des mikrobiologischen Schadstoffabbaus mit Mikroorganismen versorgt werden, wobei Mikroorganismen bevorzugt sind, die an die den Boden kontaminierenden Stoffe adaptiert sind.

5. Verfahren nach einem der Ansprüche 1 bis 4, dadurch gekennzeichnet, daß die Mieten während des mikrobiologischen Schadstoffabbaus mit Wasser berieselt werden, das bevorzugt Mikroorganismen und/oder Nährstoffe für die Mikroorganismen enthält.

6. Verfahren nach einem der Ansprüche 1 bis 5, dadurch gekennzeichnet, daß die Mieten während des mikrobiologischen Schadstoffabbaus belüftet werden, um sie so mit Sauerstoff zu versorgen.

7. Verfahren nach einem der Ansprüche 1 bis 6, dadurch gekennzeichnet, daß die Mieten während des mikrobiologischen Schadstoffabbaus sowohl passiv mittels Drainagerohren als auch aktiv mittels eines Kompressors und eines Belüftungsrohrsystems belüftet werden.

8. Verfahren nach einem der Ansprüche 1 bis 7, dadurch gekennzeichnet, daß der Untergrund der Mieten mittels Dichtbahnen abgedichtet ist.

9. Verfahren nach einem der Ansprüche 1 bis 8, dadurch gekennzeichnet, daß in die Mieten eine Drainage eingebaut ist, über die das anfallende Sicker-, Niederschlagsund Behandlungswasser gesammelt und einer Kläranlage zugeführt werden kann.

10. Verfahren nach einem der Ansprüche 1 bis 5 und 8 bis 9, dadurch gekennzeichnet, daß zusätzlich während des mikrobiologischen Schadstoffabbaus eine Bodenluftabsaugung durchgeführt wird.

11. Verfahren nach einem der Ansprüche 1 bis 10, dadurch gekennzeichnet, daß zusätzlich während des mikrobiologischen Schadstoffabbaus eine Extraktion biologisch nicht oder nur schwer abbaubarer Schadstoffe durchgeführt wird.

**EP 0 453 446 B1**

**Claims**

1. Method for the microbiological decontamination of soil, in which
   1) the contaminated soil is excavated and treated,
   2) the treated soil is banked up on a prepared subsoil in the form of regeneration clamps, and
   3) the clamps are provided with oxygen while microbiological degradation of the contaminants takes place,
   characterised in that a treatment of the contaminated soil in which the soil is mixed with concrete and/or mineral building rubble which had previously been comminuted to a particle size $\leqq$ 10 mm, preferably $\leqq$ 6 mm.

2. Method according to Claim 1, characterised in that the concrete and/or building rubble is likewise contaminated.

3. Method according to Claim 1 or 2, characterised in that the mixing ratio soil : concrete and/or building rubble is between 1 : 9 and 9 : 1 parts by volume, preferably 1 : 1 and 3 : 1 parts by volume.

4. Method according to one of Claims 1 to 3, characterised in that the clamps are supplied with microorganisms during microbiological degradation of the contaminants, those microorganisms being preferred which are adapted to the substances contaminating the soil.

5. Method according to one of Claims 1 to 4, characterised in that the clamps are sprinkled with water during microbiological degradation of the contaminants which preferably contains microorganisms and/or nutrients for the microorganisms.

6. Method according to one of Claims 1 to 5, characterised in that the clamps are aerated during the microbiological degradation of the contaminants in order to provide them with oxygen.

7. Method according to one of Claims 1 to 6, characterised in that the clamps are aerated during the microbiological degradation of the contaminants both passively by means of drainage pipes and actively by means of a compressor and an aeration tube system.

8. Method according to one of Claims 1 to 7, characterised in that the subsoil of the clamps is sealed by means of tight webs.

9. Method according to one of Claims 1 to 8, characterised in that a drainage is incorporated in the clamps, via which the percolating water, water from precipitation and treatment water which occurs is collected and fed to a treatment plant.

10. Method according to one of Claims 1 to 5 and 8 to 9, characterised in that soil air is additionally pumped off during the microbiological degradation of the contaminants.

11. Method according to one of Claims 1 to 10, characterised in that an extraction of contaminants which are not biodegradable, or only with difficulty, is additionally carried out during the microbiological degradation of the contaminants.

**Revendications**

1. Procédé pour la décontamination microbiologique des sols, suivant lequel :
   (1) le sol contaminé est décoffré et traité ;
   (2) le sol traité est disposé en couche sur un fond préparé en silos de régénération ; et
   (3) les silos sont alimentés par de l'oxygène pendant la décomposition microbiologique des substances polluantes,
   caractérisé par le fait que le sol contaminé est traité en étant mélangé avec du béton et/ou des gravats minéraux qui ont été préalablement concassés à une grosseur de grain $\leqq$ 10 mm, de préférence $\leqq$ 6 mm.

2. Procédé selon la revendication 1, caractérisé par le fait que le béton et/ou les gravats sont également contaminés.

9

3. Procédé selon l'une des revendications 1 et 2, caractérisé par le fait que le rapport de mélange sol : béton et/ou gravats s'élève à une valeur comprise entre 1:9 et 9:1 en parties en volume, de préférence entre 1:1 et 3:1 en parties en volume.

4. Procédé selon l'une des revendications 1 à 3, caractérisé par le fait que les silos sont alimentés par des microorganismes pendant la décomposition microbiologique des substances polluantes, où l'on préfère des microorganismes qui sont adaptés aux substances contaminant le sol.

5. Procédé selon l'une des revendications 1 à 4, caractérisé par le fait que les silos sont, pendant la décomposition microbiologique des substances polluantes, irrigués par de l'eau, laquelle contient, de préférence, des microorganismes et/ou des substances nutritives pour les microorganismes.

6. Procédé selon l'une des revendications 1 à 5, caractérisé par le fait que les silos sont ventilés pendant la décomposition microbiologique des substances polluantes, pour les alimenter ainsi en oxygène.

7. Procédé selon l'une des revendications 1 à 6, caractérisé par le fait que les silos sont ventilés pendant la décomposition microbiologique des substances polluantes non seulement de façon passive au moyen de tubes de drainage, mais encore de façon active au moyen d'un compresseur et d'un système de tubes de ventilation.

8. Procédé selon l'une des revendications 1 à 7, caractérisé par le fait que le fond des silos est rendu étanche au moyen de bandes d'étanchéité.

9. Procédé selon l'une des revendications 1 à 8, caractérisé par le fait que, dans les silos, est incorporé un drainage, par l'intermédiaire duquel les eaux d'infiltration, de précipitation et de traitement produites peuvent être rassemblées et amenées à une station d'épuration.

10. Procédé selon l'une des revendications 1 à 5 et 8 à 9, caractérisé par le fait qu'en outre, pendant la décomposition microbiologique des substances polluantes, est conduite une aspiration de l'air à la surface du sol.

11. Procédé selon l'une des revendications 1 à 10, caractérisé par le fait qu'en outre, pendant la décomposition microbiologique des substances polluantes, est conduite une extraction des substances polluantes non biologiquement décomposables ou simplement difficilement biologiquement décomposables.

FIG. 1